# EUROPEAN PATENT SPECIFICATION

(11) **EP 3 319 409 B1**
(45) Date of publication and mention of the grant of the patent: **19.06.2019**
(21) Application number: 16748055.7
(22) Date of filing: 08.07.2016
(51) Int. Cl.: A01B 3/36, A01B 63/00

(54) **A PLOUGH SYSTEM**
PFLUGSYSTEM
SYSTÈME DE CHARRUE

(30) Priority: 08.07.2015 DK 201500395
(43) Date of publication of application: 16.05.2018
(73) Proprietor: Agro Intelligence ApS, 8200 Aarhus N (DK)
(72) Inventor: GREEN, Ole, 6940 Lem St. (DK); SØREN KIRKEGAARD, Nielson, 8600 Silkeborg (DK)
(74) Representative: Rasmussen, Martin Hoffgaard
(86) International application number: PCT/DK2016/000028
(87) International publication number: WO 2017/005263

(56) References cited:
- EP-A1- 2 425 696
- EP-A2- 0 169 619
- WO-A1-84/02250
- CA-A1- 2 734 888

## Description

### Field of the invention

The present invention relates in a first aspect to a plough system for ploughing soil. The present invention relates in a second aspect to the use of a plough system of the first aspect for ploughing soil. The present invention relates in a third aspect to a method of ploughing.

### Background of the invention

Within the field of agriculture ploughing has been around a long time as an effective tillage method.

Ploughing is used as a way to prepare the soil for seeding. When ploughing the soil is turned around, so that soil previously located in a certain depth will appear as a top layer of the soil. A typical ploughing depth is 18 to 20 cm, but can vary between 5 and 100 cm.

The turning of the soil upon ploughing will provide for aerating the soil and in this way will provide mineralization of soil and better drainage of water which improve fertility. Also, ploughing will remove residues of last year's crops as well as removal of any weed present on the ploughed field. In this way ploughing may be used as a mechanical weed control method, especially in ecological agriculture where herbicides are forbidden.

Today's ploughs comprise a frame to be towed behind or carried by a tractor or the like. The frame carries a number of plough bodies arranged inline in a staggered configuration in relation to a direction transversal to the direction of movement and to the direction of movement itself. The frame comprises a hoist mechanism for raising from the soil or lowering into the soil all the plough shears simultaneously.

When ploughing a field the farmer usually, at least mentally, divide the land to be ploughed into a main part comprising a regularly shaped inner part (the main land) of the field and a surrounding headland. In this way the farmer can concentrate in first ploughing the main part by following a regular serpentine path, whereas the headland is used for turning the tractor in order to plough a subsequent leg of the serpentine path. After having ploughed the inner main part of the field, the farmer ploughs the headland.

When ploughing the inner main part of the field, the farmer raises all the plough shears from the soil upon entering the headland. Similarly when moving from the headland into the main, inner part of the field, the farmer lowers all the plough shears into the soil.

Although this way of performing the ploughing has proven efficient, there are however some drawback using this technique.

One drawback is, that due to the fact that all the plough shears are arranged in a staggered configuration which is not perpendicular to the direction of movement of the plough through the soil, it will not be possible, at the boundary between the inner, main part of the field and the headland to exactly and precisely plough the soil up to this boundary.

If the farmer wishes to plough all the inner, main part of the field, the ploughing will in respect of some plough shears - due to the staggered configuration of the plough shears - inevitably plough into the headland.

Consequently, when the farmer after having ploughed the whole area of the inner, main part of the field, subsequently ploughs the headland, part of the soil of the headland, will be ploughed again and thus become turned around twice.

Turning around soil twice corresponds to some extent to not turning around the soil at all, at least when it comes to allow weed to continue growth.

Accordingly, part of the headland will exhibit areas of soil in which the weed, which was supposed to be buried with soil during ploughing, will have an initial advantage in terms of rooting and growth, compared to the crops being sown.

This obviously has the consequence that the crop seeds to be sown will encounter so much competition from the weed that has been turned around twice, that the growth conditions for these seeds and hence the total economical crop yield will be far from optimum.

Additionally, the overlap will result in an uneven surface after ploughing, while the boundary of the ploughing of the main land conflicts with the following ploughing of the headland.

Furthermore, ploughing the headland will due to ploughing the soil twice result in a situation, where crop residues at least partly will not be covered by soil.

EP 2 425 696 A1 discloses a plough comprising a frame onto which one or more arms each carrying a plough shear are arranged. The arms are being acted upon by an actuator, thereby allowing each arm to shift between a lowered configuration in which the corresponding plough shear is submerged into soil and a raised configuration in which the corresponding plough shear is being raised from the soil, and vice versa. The actuation of each actuator is being performed by the operator driving the tractor which is carrying or towing the plough. Use of a GPS system for aiding in operating the plough is also disclosed. However, EP 2 425 696 A1 does not disclose inclusion in a plough system of an interphase which is being configured for providing instructions to an actuator in relation to independently lowering/raising a specific plough shear, where said interphase additionally is being configured for receiving position indicating coordinates with the view to automatically lowering and raising according to a predetermined strategy.

Hence, there is a need for an improved plough system which overcomes these disadvantages.

It is an object of the present invention to provide a plough system which overcomes the above-identified disadvantages.

### Brief description of the invention

This object is fulfilled by a plough system having the features as defined in claim 1, by the use having the features as defined in claim 22 and the method having the features as defined in claim 23.

Preferred embodiments are defined in the dependent claims and explained in the following description and illustrated by the accompanying drawings.

Accordingly, the present invention relates in a first aspect to a plough system comprising:
i) a plough frame, said plough frame comprising coupling means for coupling said plough frame to a towing vehicle;
   wherein said plough frame having an extension in a lengthwise direction, and an extension transverse direction;
   wherein said plow frame comprising two or more lifting means; said lifting means comprising a fixed part being mounted on said plough frame, and a moving part carrying a plough shear;
   wherein each said lifting means comprising an actuator;
   wherein said actuator being configured to allow altering of said plough shear from a lowered position to a raised position, and vice versa;
   wherein said plough shears being arranged on said frame in mutual staggered orientation in relation to a lengthwise direction as well as to a transverse direction;
ii) a control unit configured to receive controlling input, and in response thereto independently activate one or more actuators associated with said lifting means; thereby enabling independent raising and/or lowering of one or more of said plough shears.

In a second aspect the present invention relates to a use of a plough system according to the first aspect of the present invention for ploughing a field at least partly surrounded by a headland.

In a third aspect the present invention relates to a method for ploughing a field, at least partly surrounded by a headland, said method comprising:
i) defining coordinates of one or more boundaries between an inner, main field to be ploughed and the surrounding headland;
ii) providing a plough system comprising a plough frame having an extension in a lengthwise direction, and an extension transverse direction; said plow frame comprising two or more lifting means; said lifting means comprising a fixed part being mounted on said plough frame, and a moving part carrying a plough shear; wherein said lifting means comprising an actuator; wherein said actuator being configured to allow altering said plough shear from a lowed position to a raised position and vice versa; wherein said plough shears being arranged in a mutual staggered orientation in relation to a lengthwise direction as well as to a transverse direction;
ii) ploughing a field of soil by moving the plough shears through the soil of the inner, main field to be ploughed;
iii) in respect of each of the plough shears, raising a specific plough shears in case a specific plough shear is crossing the boundary between the inner, main field to be ploughed and an associated headland, in a direction from the inner, main field to be ploughed to the headland;
iv) in respect of each of the plough shears, lowering a specific plough shears in case a specific plough shear is crossing the boundary between the inner, main field to be ploughed and an associated headland, in a direction from the headland to the inner, main field to be ploughed.
v) ploughing the area of the headland at least partly surrounding the inner, main field.

The present invention in its first, second and third aspects provide for improved germination and growth conditions for crops seeds which are being sown in a field comprising an inner, main field, which is at least partly surrounded by a headland, subsequent to ploughing thereof.

Additionally, the present invention in its various aspects provides for a more efficient ploughing in that necessity to plough certain areas of the field twice is avoided.

### Brief description of the figures

Fig. 1 is a plan view of a field being ploughed with a prior art ploughing system.
Fig. 2 is a perspective view illustrating a ploughing system according to the first aspect of the present invention.
Fig. 3 is a schematic drawing illustrating the structure of a controlling system for controlling a plough system of the first aspect of the present invention.

### Detailed description of the invention

The present invention relates in a first aspect to a plough system comprising:
i) a plough frame, said plough frame comprising coupling means for coupling said plough frame to a towing vehicle;
   wherein said plough frame having an extension in a lengthwise direction, and an extension transverse direction;
   wherein said plow frame comprising two or more lifting means; said lifting means comprising a fixed part being mounted on said plough frame, and a moving part carrying a plough shear;
   wherein each said lifting means comprising an actuator;
   wherein said actuator being configured to allow altering of said plough shear from a lowered position to a raised position, and vice versa;
   wherein said plough shears being arranged on said frame in mutual staggered orientation in relation to a lengthwise direction as well as to a transverse direction;
ii) a control unit configured to receive controlling input, and in response thereto independently activate one or more actuators associated with said lifting means; thereby enabling independent raising and/or lowering of one or more of said plough shears.

The plough system according to the first aspect of the present invention allows for raising/lowering each plough shear independently upon crossing a boundary between a main land and a headland. Thereby double ploughing of the headland can be avoided. This result is brought about by the plough system comprising means for individually raising from or lowering into the soil the plough shears.

It should be noted that in the present description and in the appended claims the noun "controlling input" shall be interpreted as being input provided by human interaction, either directly by manual instruction or by an automatically system which has been programmed in accordance with predetermined criteria for raising/lowering the individually plough shears, e.g. in response to geographical coordinates.

Accordingly, in the present description and in the appended claims the noun "controlling input" shall not be interpreted as a "mechanical input" in the sense of a mechanical impact between a stone, a boulder or a rock located in the soil and the plough shear which will imply raising/lowering of a plough shear, such as it is known in respect of plough systems which comprise a stone release system as described in more detail below.

In one embodiment of the first aspect of the present invention, said actuators are independently being selected from the group comprising, hydraulic actuators, electric actuators, and pneumatic actuators.

In one embodiment of the first aspect of the present invention said actuators are being hydraulic actuators and wherein said control unit comprises hydraulic valves configured for activating said hydraulic actuators; or wherein said actuators are being electric actuators and wherein said control unit comprises electric switches configured for activating said electric actuators; or wherein said actuators are being pneumatic actuators and wherein said control unit comprises pneumatic valves configured for activating said pneumatic actuators.

Such actuators and types of control system have proven efficient for the intended purpose.

In one embodiment of the first aspect of the present invention in which said actuators are being hydraulic actuators it will also be possible to provide the plough system with measuring means for measuring and optionally logging the hydraulic pressure in each of the hydraulic actuators. Similar types of measuring means, and logging, may be provided in respect of electrical or pneumatic actuators.

In one embodiment of the first aspect of the present invention the plough system comprises 2 - 40 plough shears, such as 4 - 35 plough shears, for example 6-30 plough shears, such as 10 - 25 plough shears, e.g. 15 - 20 plough shears.

These numbers of plough shears are common in modern plough systems and thereby suit the modern demands for ploughing systems.

In one embodiment of the first aspect of the present invention said plough system is a reversible plough or a non-reversible plough.

The plough system according to the first aspect of the present invention is equally well-suited for reversible ploughs and for non-reversible ploughs.

In one embodiment of the first aspect of the present invention the two or more lifting means being configured in such a way that the raising and lowering of the plough shears are being performed by a pivotally movement of the moving part carrying the plough shear.

In one embodiment of the first aspect of the present invention the system is designed in such a way that in respect of one or more of said lifting means, preferably in respect of all said lifting means, said lifting means are being configured in such a way that one end of said actuator is being pivotally mounted to said fixed part of said lifting means, and in such a way that the opposite end of said actuator is being pivotally mounted to said moving part of said lifting means, wherein said two opposite ends of said actuator are being moveable in relation to each other.

This embodiment provides a simple type of construction of the feature of raising/lowering of the plough shear. Additionally this type of construction allows using a plough having a stone release system as a plough system forming the basis for the plough system according to the first aspect of the present invention. A stone release system is a plough system comprising pivotally suspended plough shears. The plough shears are being suspended and controlled by a hydraulic controller which comprises a number of hydraulic valves and tubings. A stone release system allows each plough shear to pivot in a backward direction in case a specific plough shear hits a large stone, rock or boulder in the soil, thereby avoiding mechanical destruction of the plough shears by impact with stones, rocks or boulders. The size of the impact necessary for allowing a specifically plough shear to pivot is predetermined and adjustable. Once a specific plough shears has hit a stone, rock or boulder in the soil and has pivoted backward, hydraulic valves will imply that a hydraulic pressure is reestablished so that that specific plough shear regains its lowered position into the soil.

In one embodiment of the first aspect of the present invention, the plough system comprises a stone release mechanism and wherein said two or more lifting means being integrated with said stone release mechanism.

In one embodiment of the first aspect of the present invention the plough system further comprises an interphase, said interphase being configured so as to enable providing instructions to an actuator in relation to independently lowing/raising a specific plough shear.

In one embodiment of the first aspect of the present invention said interphase being configured to enable providing instructions to said actuator in relation to independently lowing/raising a specific plough shear, by providing controlling input to said control unit.

An interphase may serve as an intermediate unit between the control unit and the specific lifting means of the plough shears, thereby effecting the raising and/or lowering of the plough shears.

In one embodiment of the first aspect of the present invention, the plough system furthermore comprising input means, such a keyboard or a tablet for programming said interphase; said system optionally furthermore comprising a monitor.

In one embodiment of the first aspect of the present invention said monitor is being configured for monitoring the settings and/or the status of the operation of the plough system.

Input means and a monitor allows a user to input data to the system in relation to program the system with the view to provide an automatically controlled plough system. Further, the monitor allows monitoring the settings and performance of the system during use. This will enable monitoring and controlling by an operator, the proper functioning of the plough system during use thereof.

In one embodiment of the first aspect of the present invention the plough system further comprising a data storage; said data storage being configured to allow storing of coordinates relating to one or more boundaries between a main, inner field to be ploughed and a surrounding headland.

A data storage allows for automatically control a ploughing of soil.

In one embodiment of the first aspect of the present invention, the interphase being configured to receive position indication coordinates from a position indication receiver.

In one embodiment of the first aspect of the present invention, the position indication coordinates are provided by a satellite navigation system, such as a Global Navigation Satellite System (GNSS), such as a GPS system.

In one embodiment of the first aspect of the present invention, the system further comprising one or more of such a position indication receiver, such as a satellite navigation system, for example a GPS system.

In one embodiment of the first aspect of the present invention, the number of position indicating receivers is equal to the number of plough shears; and wherein a position indication receiver is being arranged at the position of each plough shear.

Providing the plough system with one or more position indication receiver allows knowing with great accuracy, at any given time, the position of that position indication receiver. This will allow knowing, at any given time, the position of one or more, preferably all, of said plough shears.

In one embodiment of the first aspect of the present invention, the plough system further comprising a data storage configured to enable storing thereon, data relating to the relative position of the one or more, preferably all, of said plough shears, in relation to said position indication receiver, and wherein said interphase being configured to calculate, on the basis thereof and on the basis of the coordinates received by a position indication receiver, the absolute coordinates of the one or more, preferably all of the plough shares.

Such systems enables constantly knowing the exact position of each of the plough shears and thereby allows determining whether a specific plough shear is to be lowered into the soil or raised above the soil.

In one embodiment of the first aspect of the present invention said control unit is being configured for automatically controlling said activation of one or more actuators with the view to automatically and independently raising and/or lowering of one or more of said plough shears.

This will allow an easy and convenient precise ploughing operation by the user, thereby making the ploughing operation more efficient.

In one embodiment of the first aspect of the present invention, the plough system being configured, via said interphase, to provide signals to said control unit relating to instructions of independently lowering or raising one or more plough shears according to a predetermined strategy.

In one embodiment of the first aspect of the present invention, said predetermined strategy comprises the following elements:
a) in case a specific plough shear being located within the inner, main field to be ploughed, said plough shear must be arranged in a lowered position;
b) in case a specific plough shear being located within a headland, said plough shear must be arranged in a raised position;
c) in case a specific plough shear is crossing the boundary between the inner, main field to be ploughed and an associated headland, in a direction from the inner, main field to be ploughed to the headland, that specific plough shear must change position from a lowered position to a raised position;
d) in case a specific plough shear is crossing the boundary between the inner, main field to be ploughed and an associated headland, in a direction from the headland to the inner, main field to be ploughed, that specific plough shear must change position from a raised position to a lowered position.

Such a strategy allows automatically controlling of the plough system.

In a second aspect the present invention relates to a use of a plough system according to the first aspect of the present invention for ploughing a field at least partly surrounded by a headland.

In a third aspect the present invention relates to a method for ploughing a field, at least partly surrounded by a headland, said method comprising:
i) defining coordinates of one or more boundaries between an inner, main field to be ploughed and the surrounding headland;
ii) providing a plough system comprising a plough frame having an extension in a lengthwise direction, and an extension transverse direction; said plow frame comprising two or more lifting means; said lifting means comprising a fixed part being mounted on said plough frame, and a moving part carrying a plough shear; wherein said lifting means comprising an actuator; wherein said actuator being configured to allow altering said plough shear from a lowed position to a raised position and vice versa; wherein said plough shears being arranged in a mutual staggered orientation in relation to a lengthwise direction as well as to a transverse direction;
ii) ploughing a field of soil by moving the plough shears through the soil of the inner, main field to be ploughed;
iii) in respect of each of the plough shears, raising a specific plough shears in case a specific plough shear is crossing the boundary between the inner, main field to be ploughed and an associated headland, in a direction from the inner, main field to be ploughed to the headland;
iv) in respect of each of the plough shears, lowering a specific plough shears in case a specific plough shear is crossing the boundary between the inner, main field to be ploughed and an associated headland, in a direction from the headland to the inner, main field to be ploughed.
v) ploughing the area of the headland at least partly surrounding the inner, main field.

In one embodiment of the third aspect of the present invention said raising and lowering of a specific plough shear is being performed automatically.

In one embodiment of the first aspect of the present invention, the method being performed by using a plough system according to the first aspect of the invention.

According to the use and the method of the second and third aspect, respectively, the plough system may be suitable for plough irregularly shaped fields or parts of fields, such as a wedged shaped fields, where not all plough shears are desired to be lowered into the soil at all time. In ploughing such shapes of fields or parts of fields, one or more of the plough shres may be lifted, while one or more of the plough shears are submerged into the soil for ploughing purposes.

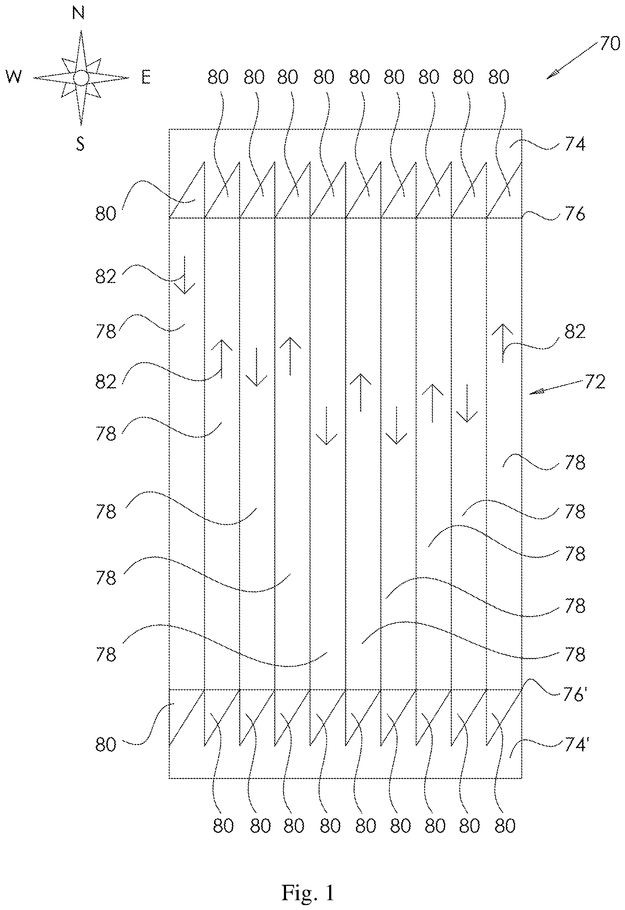

Referring now in detail to the drawings for the purpose of illustrating preferred embodiments of the present invention, Fig. 1 illustrates the problems associated with ploughing using a prior art plough system in which a number of staggered arranged plough shears may only be raised and lowered simultaneously.

Fig. 1 shows a plan view of a field 70 to be ploughed. The field 70 is having a rectangular shape and being oblong in a north-south direction. The field 70 to be ploughed comprises an inner, main field 72. North and south to the inner, main field 72, respectively is located a headland 74,74'.

The northern headland 74 is separated from the inner main field 72 by a boundary 76. Likewise, the southern headland 74' is separated from the inner main field 72 by a boundary 76'.

When ploughing the field 70 using a traditional and prior art plough system, the farmer will use a plough system having a number of plough shears arranged in a staggered configuration in relation to the longitudinal direction as well as to the transverse direction of the plough system. The rightmost plough shear accordingly is the leading plough shear, whereas the leftmost plough shear is the trailing plough shear.

The farmer will start ploughing in the northern headland 74 in a western end thereof. The farmer will move forward in a southern direction and he will lower all the plough shears simultaneously when the leading rightmost plough shear crosses the boundary 76. This will have the consequence that the part 80 of the headland 74 will be ploughed.

The farmer continues ploughing in a southern direction following the leg 78 of the ploughing trail into the southern headland 74' and when the trailing and leftmost plough shear crosses the boundary 76' he well simultaneously raise all the plough shears. This will have the consequence that the part 80 of the headland 74' will be ploughed.

In the headland 74' the farmer will turn the vehicle towing the plough system and continue ploughing in a northern direction.

Accordingly, the farmer continues ploughing in this way in a successive southern and northern direction following a serpentine path.

The farmer will finalize ploughing the inner main field 72 when he reaches the eastern part of the northern headland 74.

At this time, all of the inner main field 72 has been ploughed. However, also soil of the parts 80 of the northern headland 74 as well as soil of the parts 80 of the southern headland 74' will have been ploughed this way.

In order to finish ploughing the field 70, the farmer finally ploughs the northern headland 74 and the southern headland. In this specific example he will follow a western-eastern serpentine path when doing so.

When the field 70 comprising the inner main field 72 and the northern headland 74 as well as the southern headland 74' have been ploughed, all the parts 80 in the northern headland 74 the southern headland 74' will have been subjected to ploughing twice which means that any soil in the areas 80 containing weed will have been turned around twice which means that the weed will not have been buried to the extent that the growth conditions for the weed will be impaired.

Accordingly, crop seeds which will subsequently be sown in the soil of the areas 80 will encounter a strong competition in relation to seeding and growth in relation to the weed which was previously present in these areas. For this reason, the areas 80 will not provide optimum growth conditions for the crop seeds to be sown.

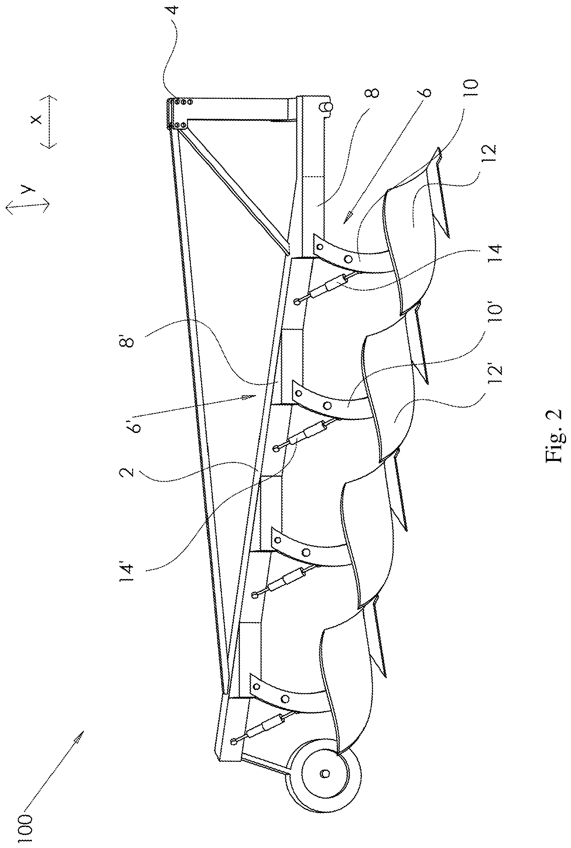

Fig. 2 is a perspective view illustrating a plough system 100 according to the first aspect of the present invention. The plough system 100 comprises i) a plough frame 2; and ii) a control unit 16 (not seen in fig. 2).

The plough frame 2 comprising coupling means 4 for coupling said plough frame to a towing vehicle; wherein said plough frame having an extension in a lengthwise direction X, and an extension transverse direction Y. The lengthwise direction X is essentially parallel to the intended direction of movement of the plough shear through the soil; whereas the transverse direction Y is essentially perpendicular thereto.

The plough frame comprising two or more lifting means 6,6' comprising a fixed part 8 being mounted on said plough frame 2, and a moving part 10 carrying a plough shear 12,12'. The moving part 10 is pivotally moveable in relation to the frame 2.

Each said lifting means 6,6' comprising an actuator 14,14'. Each said actuator being configured to allow altering of said plough shears 12,12' from a lowered position to a raised position, and vice versa.

The plough shears 12,12' being arranged on said frame in mutual staggered orientation in relation to a lengthwise direction as well as to a transverse direction.

A control unit 16 (not seen in fig. 2) is configured to receive controlling input 18, and in response thereto independently activate one or more actuators 14,14' associated with said lifting means; thereby enabling independent raising and/or lowering of one or more of said plough shears 12,12'.

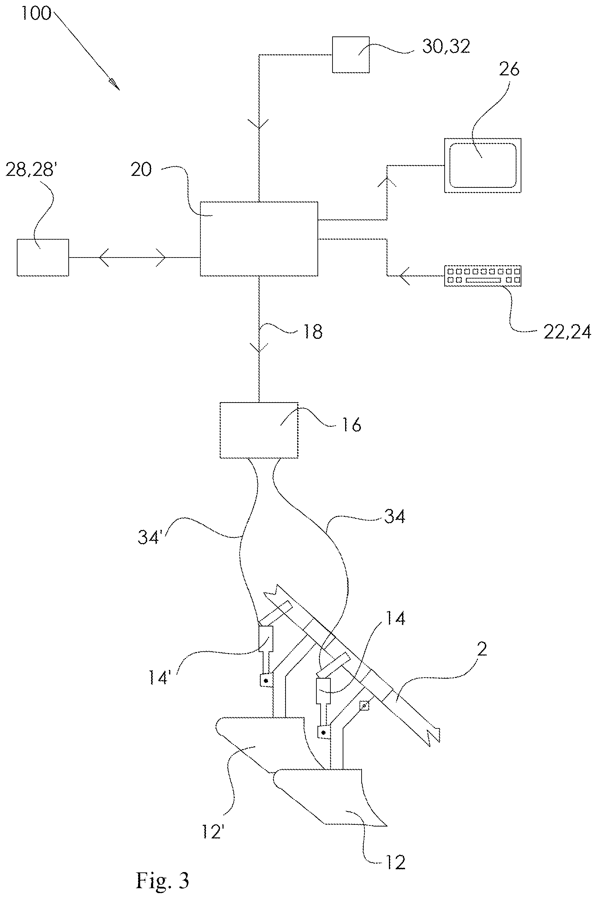

Fig. 3 illustrates one embodiment of a controlling system of the plough system 100 of the first aspect of the present invention. The controlling system comprises an interphase 20.

The interphase being configured to enable providing instructions to an actuator 14,14' in relation to lowing/raising a specific plough shear 12,12'. This is brought about via the control unit 16 which is a control unit for controlling the hydraulic actuators 14,14' upon receipt of instructions to this end and by controlling the hydraulic pressure in the hydraulic hoses 34,34'. The actuation of the actuators 14,14' will effect lowering or rasing the plough shears 12,12 pivotally suspended on the frame 2 of the plough system.

The interphase 20 is being managed or programmed via input means 22 in the form of a keyboard or a tablet 24. A monitor 26 allows an operator to monitor the settings of the interphase.

The interphase 20 comprises a data storage 28. The data storage is configured to allow storing of coordinates relating to one or more boundaries 76,76' between a main, inner field 72 to be ploughed and a surrounding headland 74,74'.

The interphase 20 is also configured to receive position indication coordinates from a position indication receiver 30 in the form of GNSS, e.g. a GPS satellite navigation system 32.

A data storage 28' is configured to enable storing thereon, data relating to the relative position of the one or more, preferably all, of said plough shears 12,12', in relation to said position indication receiver 30. Furthermore, the interphase 20 is configured to calculate, on the basis thereof and on the basis of the coordinates received by the position indication receiver 30, the absolute coordinates of the one or more, preferably all, of the plough shares 12,12'. The data storage 28' may be the same or different form the data storage 28.

In this way, based on the absolute position of the position indication receiver 30 and the relative position of each plough shear 12,12', the absolute position of each plough shear 12,12' will continuously be calculated.

The interphase 20 is configured to provide signals to the control unit 16 relating to instructions of independently lowering or raising one or more plough shears 12,12' according to a predetermined strategy.

One preferred predetermined strategy comprises the following elements:
a) in case a specific plough shear 12,12' being located within the inner, main field 72 to be ploughed, said plough shear must be arranged in a lowered position;
b) in case a specific plough shear 12,12' being located within a headland 74,74', said plough shear must be arranged in a raised position;
c) in case a specific plough shear 12,12' is crossing the boundary 76,76' between the inner, main field to be ploughed and an associated headland 74,74', in a direction from the inner, main field to be ploughed to the headland, that specific plough shear must change position from a lowered position to a raised position;
d) in case a specific plough shear 12,12' is crossing the boundary 76,76' between the inner, main field 72 to be ploughed and an associated headland 74,74', in a direction from the headland to the inner, main field to be ploughed, that specific plough shear must change position from a raised position to a lowered position.

Accordingly, the plough system 100 schematically illustrated in fig. 3 allows for independently and automatically controlling the raising and lowering of the plough shears based on the position of each plough shear 12,12' and based on whether each specific plough shear is located in an inner, main field 72 to be ploughed or in an associated headland 74,74'.

Hence, the plough system depicted in fig. 3 allows for avoidance of turning part of the soil twice and thereby will improve germination and growth conditions for crops seed to be sown following ploughing.

### List of reference numerals

- 2: Plough frame
- 4: Coupling means
- 6,6': Lifting means
- 8: Fixed part of lifting means
- 10: Moving part of lifting means carrying a plough shear
- 12,12': Plough shear
- 14,14': Actuator
- 16: Control unit
- 18: Controlling input
- 20: Interphase
- 22: Input means
- 24: Keyboard
- 26: Monitor
- 28,28': Data storage
- 30: Position indicating receiver
- 32: Satellite navigation system
- 34: Hydraulic hose
- 70: Field to be ploughed
- 72: Inner, main field to be ploughed
- 74,74': Headland at least partly surrounding the main area of field to be ploughed
- 76,76': Boundary between inner, main field to be ploughed and headland
- 78: Legs of ploughing trails
- 80: Areas subject to ploughing twice
- 82: Ploughing direction
- 100: Plough system
- X: Lengthwise direction
- Y: Transverse direction

## Claims

1. A plough system (100) comprising:
i) a plough frame (2), said plough frame comprising coupling means (4) for coupling said plough frame to a towing vehicle;
wherein said plough frame having an extension in a lengthwise direction (X), and an extension in a transverse direction (Y);
wherein said plough frame comprising two or more lifting means (6,6'); said lifting means comprising a fixed part (8) being mounted on said plough frame (2), and a moving part (10) carrying a plough shear (12,12');
wherein each said lifting means (6,6') comprising an actuator (14,14');
wherein said actuator being configured to allow altering of said plough shears (12,12') from a lowered position to a raised position, and vice versa;
wherein said plough shears (12,12') being arranged on said frame in mutual staggered orientation in relation to a lengthwise direction as well as to a transverse direction;
ii) a control unit (16) configured to receive controlling input (18), and in response thereto independently activate one or more actuators (14,14') associated with said lifting means; thereby enabling independent raising and/or lowering of one or more of said plough shears (12,12');
**characterized in that** said plough system further comprising an interphase (20), said interphase being configured so as to enable providing instructions to an actuator (14,14') in relation to independently lowing/raising a specific plough shear (12,12');
said interphase (20) being configured to receive position indication coordinates from a position indication receiver (30);
wherein said plough system further comprising a data storage (28') configured to enable storing thereon, data relating to the relative position of the one or more, preferably all, of said plough shears (12,12'), in relation to said position indication receiver (30), and wherein said interphase (20) being configured to calculate, on the basis thereof and on the basis of the coordinates received by a position indication receiver, the absolute coordinates of the one or more, preferably all of the plough shares (12,12'); or
wherein the number of position indicating receivers is equal to the number of plough shears; and wherein a position indication receiver is being arranged at the position of each plough shear.

2. A plough system (100) according to claim1, wherein said actuators (14,14') are being hydraulic actuators and wherein said control unit (16) comprises hydraulic valves configured for activating said hydraulic actuators; or wherein said actuators (14,14') are being electric actuators and wherein said control unit (16) comprises electric switches configured for activating said electric actuators; or wherein said actuators (14,14') are being pneumatic actuators and wherein said control unit (16) comprises pneumatic valves configured for activating said pneumatic actuators.

3. A plough system (100) according to claim 1 or 2, wherein said plough system is a reversible plough or a non-reversible plough.

4. A plough system (100) according to any of the preceding claims, wherein said two or more lifting means (6,6') being configured in such a way that the raising and lowering of the plough shears (12,12') are being performed by a pivotally movement of the moving part (10) carrying the plough shear (12,12').

5. A plough system (100) according to any of the preceding claims, wherein in respect of one or more of said lifting means, preferably in respect of all said lifting means, said lifting means are being configured in such a way that one end of said actuator (14,14') is being pivotally mounted to said fixed part (8) of said lifting means, and in such a way that the opposite end of said actuator is being pivotally mounted to said moving part (10) of said lifting means, wherein said two opposite ends of said actuator are being moveable in relation to each other.

6. A plough system (100) according to any of the claims 1 - 5, wherein said interphase being configured to enable providing instructions to said actuator (14,14') in relation to independently lowing/raising a specific plough shear (12,12'), by providing controlling input to said control unit (16).

7. A plough system (100) according to claim 6, wherein said system furthermore comprising input means (22), such a keyboard or a tablet (24) for programming said interphase; said system optionally furthermore comprising a monitor (26); wherein said monitor (26) is being configured for monitoring the settings and/or the status of the operation of the plough system.

8. A plough system (100) according to any of the preceding claims further comprising a data storage (28); said data storage being configured to allow storing data associated with coordinates relating to one or more boundaries (76,76') between a main, inner field (72) to be ploughed and a surrounding headland (74,74').

9. A plough system (100) according to claim 1, wherein said position indication coordinates are provided by a satellite navigation system (32), such as a Global Navigation Satellite System (GNSS), such as a GPS system.

10. A plough system (100) according to any of the claims claim 1 - 9 further comprising one or more of such a position indication receiver, such as a satellite navigation system (32), for example a GPS system.

11. A plough system (100) according to any of the preceding claims wherein said control unit (16) is being configured for automatically controlling said activation of one or more actuators (14,14') with the view to automatically and independently raising and/or lowering of one or more of said plough shears.

12. A plough system (100) according to any of the claims 1 - 11, wherein said plough system being configured, via said interphase (20), to provide signals to said control unit (16) relating to instructions of independently lowering or raising one or more plough shears (12,12') according to a predetermined strategy;
wherein said predetermined strategy optionally comprises the following elements:
a) in case a specific plough shear (12,12') being located within the inner, main field (72) to be ploughed, said plough shear must be arranged in a lowered position;
b) in case a specific plough shear (12,12') being located within a headland (74,74'), said plough shear must be arranged in a raised position;
c) in case a specific plough shear (12,12') is crossing the boundary (76,76') between the inner, main field to be ploughed and an associated headland (74,74'), in a direction from the inner, main field to be ploughed to the headland, that specific plough shear must change position from a lowered position to a raised position;
d) in case a specific plough shear (12,12') is crossing the boundary (76,76') between the inner, main field (72) to be ploughed and an associated headland (74,74'), in a direction from the headland to the inner, main field to be ploughed, that specific plough shear must change position from a raised position to a lowered position.

13. A plough system (100) according to any of the preceding claims, wherein said plough system comprises a stone release mechanism and wherein said two or more lifting means (6,6') being integrated with said stone release mechanism.

14. Use of a plough system (100) according to any of the claims 1 - 13 for ploughing a field (72) at least partly surrounded by a headland (74,74').

15. A method for ploughing a field (72), at least partly surrounded by a headland (74,74'), said method comprising:
i) defining coordinates of one or more boundaries (76,76') between an inner, main field (72) to be ploughed and the surrounding headland (74,74');
ii) providing a plough system (100) according to any of the claims 1 - 17;
ii) ploughing a field of soil by moving the plough shears (12,12') through the soil of the inner, main field (72) to be ploughed;
iii) in respect of each of the plough shears (12,12'), raising a specific plough shears in case a specific plough shear is crossing the boundary (76,76') between the inner, main field (72) to be ploughed and an associated headland (74,74'), in a direction from the inner, main field to be ploughed to the headland;
iv) in respect of each of the plough shears (12,12), lowering a specific plough shears in case a specific plough shear is crossing the boundary (76,76') between the inner, main field (72) to be ploughed and an associated headland (74,74'), in a direction from the headland to the inner, main field to be ploughed.
v) ploughing the area of the headland (74,74') at least partly surrounding the inner, main field (72);
wherein said raising and lowering of a specific plough shear (12,12') optionally is being performed automatically.

## Patentansprüche

1. Pflugsystem (100), umfassend:
i) einen Pflugrahmen (2), wobei der Pflugrahmen Kopplungsmittel (4) zur Kopplung des Pflugrahmens mit einem Zugfahrzeug umfasst;
wobei der Pflugrahmen eine Verlängerung in einer Längsrichtung (X) und eine Verlängerung in einer Querrichtung (Y) aufweist;
wobei der Pflugrahmen zwei oder mehr Hebemittel (6, 6') umfasst; wobei das Hebemittel einen festen Teil (8), der auf dem Pflugrahmen (2) montiert ist, und einen beweglichen Teil (10) umfasst, der eine Pflugschar (12, 12') trägt;
wobei jedes der Hebemittel (6, 6') ein Stellglied (14, 14') umfasst;
wobei das Stellglied konfiguriert ist, um das Ändern der Pflugscharen (12, 12') von einer abgesenkten Position in eine angehobene Position und umgekehrt zu ermöglichen;
wobei die Pflugschar (12, 12') auf dem Rahmen in gegenseitiger versetzter Ausrichtung in Bezug auf eine Längsrichtung sowie eine Querrichtung angeordnet ist;
ii) eine Steuereinheit (16), die konfiguriert ist, um Steuereingaben (18) zu empfangen und als Reaktion darauf unabhängig einen oder mehrere Stellglieder (14, 14') zu anzusteuern, die dem Hebemittel zugeordnet sind; wodurch ein unabhängiges Anheben und/oder Absenken einer oder mehrerer der Pflugscharen (12, 12') ermöglicht wird;
**dadurch gekennzeichnet, dass** das Pflugsystem weiter eine Zwischenphase (20) umfasst, wobei die Zwischenphase so konfiguriert ist, dass sie es ermöglicht, Anweisungen an ein Stellglied (14, 14') in Bezug auf das unabhängige Absenken/Anheben einer bestimmten Pflugschar (12, 12') zu geben;
wobei die Zwischenphase (20) konfiguriert ist, um Positionsanzeigekoordinaten von einem Positionsanzeigeempfänger (30) zu empfangen;
wobei das Pflugsystem weiter einen Datenspeicher (28') umfasst, der konfiguriert ist, um darauf Daten bezüglich der relativen Position der einen oder mehreren, vorzugsweise aller der Pflugscharen (12, 12') in Bezug auf den Positionsanzeigeempfänger (30) zu speichern, und wobei die Zwischenphase (20) konfiguriert ist, um auf der Grundlage derselben und auf der Grundlage der von einem Positionsanzeigeempfänger empfangenen Koordinaten die absoluten Koordinaten des einen oder der mehreren, vorzugsweise aller Pflugscharen (12, 12') zu berechnen; oder
wobei die Anzahl der Positionsanzeigeempfänger gleich der Anzahl der Pflugscharen ist; und wobei ein Positionsanzeigeempfänger an der Position jeder Pflugschar angeordnet ist.

2. Pflugsystem (100) nach Anspruch 1, wobei die Stellglieder (14, 14') hydraulische Stellglieder sind und wobei die Steuereinheit (16) Hydraulikventile umfasst, die zum Ansteuern der hydraulischen Stellglieder konfiguriert sind; oder wobei die Stellglieder (14, 14') elektrische Stellglieder sind und wobei die Steuereinheit (16) elektrische Schalter umfasst, die zum Ansteuern der elektrischen Stellglieder konfiguriert sind; oder wobei die Stellglieder (14, 14') pneumatische Stellglieder sind und wobei die Steuereinheit (16) pneumatische Ventile umfasst, die zum Ansteuern der pneumatischen Stellglieder konfiguriert sind.

3. Pflugsystem (100) nach Anspruch 1 oder 2, wobei das Pflugsystem ein Wendepflug oder ein Nichtwendepflug ist.

4. Pflugsystem (100) nach einem der vorstehenden Ansprüche, wobei die zwei oder mehr Hebemittel (6, 6') so konfiguriert sind, dass das Anheben und Absenken der Pflugscharen (12, 12') durch eine Schwenkbewegung des die Pflugschar (12, 12') tragenden beweglichen Teils (10) durchgeführt werden.

5. Pflugsystem (100) nach einem der vorstehenden Ansprüche, wobei in Bezug auf eines oder mehrere der Hebemittel, vorzugsweise in Bezug auf alle Hebemittel, die Hebemittel so konfiguriert sind, dass ein Ende des Stellglieds (14, 14') schwenkbar an dem festen Teil (8) des Hebemittels befestigt ist, und zwar so, dass das entgegengesetzte Ende des Stellglieds schwenkbar an dem beweglichen Teil (10) des Hebemittels befestigt ist, wobei die beiden gegenüberliegenden Enden des Stellglieds in Bezug aufeinander beweglich sind.

6. Pflugsystem (100) nach einem der Ansprüche 1-5, wobei die Zwischenphase konfiguriert ist, um das Bereitstellen von Anweisungen an das Stellglied (14, 14') in Bezug auf das unabhängige Absenken/Anheben einer bestimmten Pflugschar (12, 12') zu ermöglichen, indem ein Steuereingang an die Steuereinheit (16) bereitgestellt wird.

7. Pflugsystem (100) nach Anspruch 6, wobei das System weiter Eingabemittel (22), wie zum Beispiel eine Tastatur oder ein Tablet (24), zum Programmieren der Zwischenphase umfasst; wobei das System optional weiterhin einen Monitor (26) umfasst; wobei der Monitor (26) zum Überwachen der Einstellungen und/oder des Status des Betriebs des Pflugsystems konfiguriert ist.

8. Pflugsystem (100) nach einem der vorstehenden Ansprüche, weiter umfassend einen Datenspeicher (28); wobei der Datenspeicher konfiguriert ist, um das Speichern von Daten zu ermöglichen, die Koordinaten zugeordnet sind, die sich auf eine oder mehrere Grenzlinien (76, 76') zwischen einem zu pflügenden inneren Hauptfeld (72) und einem umgebenden Vorgewende (74, 74') beziehen.

9. Pflugsystem (100) nach Anspruch 1, wobei die Positionsanzeigekoordinaten von einem Satellitennavigationssystem (32), wie beispielsweise einem globalen Navigationssatellitensystem (GNSS), wie einem GPS-System, bereitgestellt werden.

10. Pflugsystem (100) nach einem der Ansprüche 1-9, weiter umfassend einen oder mehrere solcher Positionsanzeigeempfänger, wie beispielsweise ein Satellitennavigationssystem (32), zum Beispiel ein GPS-System.

11. Pflugsystem (100) nach einem der vorstehenden Ansprüche, wobei die Steuereinheit (16) konfiguriert ist, um die Ansteuerung eines oder mehrerer Stellglieder (14, 14') automatisch zu steuern, um eine oder mehrere der Pflugscharen automatisch und unabhängig anzuheben und/oder abzusenken.

12. Pflugsystem (100) nach einem der Ansprüche 1-11, wobei das Pflugsystem konfiguriert ist, über die Zwischenphase (20) Signale an die Steuereinheit (16) bereitzustellen, die sich auf Anweisungen zum unabhängigen Absenken oder Anheben einer oder mehrerer Pflugscharen (12, 12') gemäß einer vorbestimmten Strategie beziehen;
wobei die vorbestimmte Strategie optional die folgenden Elemente umfasst:
a) falls sich eine bestimmte Pflugschar (12, 12') innerhalb des zu pflügenden inneren Hauptfeldes (72) befindet, muss diese Pflugschar in einer abgesenkten Position angeordnet sein;
b) falls sich eine bestimmte Pflugschar (12, 12') innerhalb eines Vorgewendes (74, 74') befindet, muss diese Pflugschar in einer angehobenen Position angeordnet sein;
c) falls eine bestimmte Pflugschar (12, 12') die Grenzlinie (76, 76') zwischen dem zu pflügenden inneren Hauptfeld und einem zugeordneten Vorgewende (74, 74') in einer Richtung von dem zu pflügenden inneren Hauptfeld zum Vorgewende überschreitet, muss diese bestimmte Pflugschar die Position von einer abgesenkten Position in eine angehobene Position ändern;
d) falls eine bestimmte Pflugschar (12, 12') die Grenzlinie (76, 76') zwischen dem zu pflügenden inneren Hauptfeld (72) und einem zugeordneten Vorgewende (74, 74') in einer Richtung von dem Vorgewende zu dem zu pflügenden inneren Hauptfeld überschreitet, muss diese bestimmte Pflugschar die Position von einer angehobenen Position in eine abgesenkte Position ändern.

13. Pflugsystem (100) nach einem der vorstehenden Ansprüche, wobei das Pflugsystem einen Steinablösemechanismus umfasst und wobei die zwei oder mehr Hebemittel (6, 6') mit dem Steinablösemechanismus integriert sind.

14. Verwendung eines Pflugsystems (100) nach einem der Ansprüche 1-13 zum Pflügen eines Feldes (72), das zumindest teilweise von einem Vorgewende (74, 74') umgeben ist.

15. Verfahren zum Pflügen eines Feldes (72), das zumindest teilweise von einem Vorgewende (74, 74') umgeben ist, wobei das Verfahren umfasst:
i) Definieren von Koordinaten einer oder mehrerer Grenzlinien (76, 76') zwischen einem zu pflügenden inneren Hauptfeld (72) und dem umgebenden Vorgewende (74, 74');
ii) Bereitstellen eines Pflugsystems (100) nach einem der Ansprüche 1-17;
ii) Pflügen eines Ackerbodenfeldes durch Bewegen der Pflugschar (12, 12') durch den Ackerboden des zu pflügenden inneren Hauptfeldes (72);
iii) in Bezug auf jede der Pflugscharen (12, 12'), Anheben einer bestimmten Pflugschar, falls eine bestimmte Pflugschar die Grenzlinie (76, 76') zwischen dem zu pflügenden inneren Hauptfeld (72) und einem zugeordneten Vorgewende (74, 74') in einer Richtung von dem zu pflügenden inneren Hauptfeld hin zum Vorgewende überschreitet;
iv) in Bezug auf jede der Pflugscharen (12, 12'), Absenken einer bestimmten Pflugschar, falls eine bestimmte Pflugschar die Grenzlinie (76, 76') zwischen dem zu pflügenden inneren Hauptfeld (72) und einem zugeordneten Vorgewende (74, 74') in einer Richtung von dem Vorgewende hin zu dem zu pflügenden inneren Hauptfeld überschreitet.
v) Pflügen des Bereichs des Vorgewende (74, 74'), der das innere Hauptfeld (72) zumindest teilweise umgibt;
wobei das Anheben und Absenken einer bestimmten Pflugschar (12, 12') optional automatisch durchgeführt wird.

## Revendications

1. Système de charrue (100) comprenant :
i) un châssis de charrue (2), ledit châssis de charrue comprenant un moyen de couplage (4) pour coupler ledit châssis de charrue à un véhicule de remorquage ;
dans lequel ledit cadre de charrue a une extension dans une direction longitudinale (X), et une extension dans une direction transversale (Y) ;
dans lequel ledit châssis de charrue comprend deux ou plus de deux moyens de levage (6, 6') ; lesdits moyens de levage comprenant une partie fixe (8) qui est montée sur ledit châssis de charrue (2), et une partie mobile (10) portant une cisaille de charrue (12, 12') ;
dans lequel chacun desdits moyens de levage (6, 6') comprend un actionneur (14, 14') ;
dans lequel ledit actionneur est configuré pour permettre de modifier lesdites cisailles de charrue (12, 12') d'une position abaissée à une position relevée, et inversement ;
dans lequel lesdites cisailles de charrue (12, 12') sont agencées sur ledit châssis dans une orientation mutuelle décalée par rapport à une direction longitudinale ainsi qu'à une direction transversale ;
ii) une unité de commande (16) configurée pour recevoir une entrée de commande (18), et en réponse à celle-ci, activer indépendamment un ou plusieurs actionneurs (14, 14') associés auxdits moyens de levage ; permettant ainsi de lever et/ou d'abaisser de manière indépendante une ou plusieurs desdites cisailles de charrue (12, 12') ;
**caractérisé en ce que** ledit système de charrue comprend en outre une interphase (20), ladite interphase étant configurée de manière à permettre de fournir des instructions à un actionneur (14, 14') en relation avec l'abaissement/le levage indépendant d'une cisaille de charrue (12, 12') spécifique ;
ladite interphase (20) étant configurée pour recevoir des coordonnées d'indication de position provenant d'un récepteur d'indication de position (30) ;
dans lequel ledit système de charrue comprend en outre un stockage de données (28') configuré pour permettre de stocker sur celui-ci, des données concernant la position relative des une ou plusieurs, de préférence la totalité, desdites cisailles de charrue (12, 12'), par rapport audit récepteur d'indication de position (30), et dans lequel ladite interphase (20) est configurée pour calculer, sur la base de celle-ci et sur la base des coordonnées reçues par un récepteur d'indication de position, les coordonnées absolues des une ou plusieurs, de préférence la totalité, des cisailles de charrue (12,12') ; ou
dans lequel le nombre de récepteurs d'indication de position est égal au nombre de cisailles de charrue ; et dans lequel un récepteur d'indication de position est agencé à la position de chaque cisaille de charrue.

2. Système de charrue (100) selon la revendication 1, dans lequel lesdits actionneurs (14, 14') sont des actionneurs hydrauliques et dans lequel ladite unité de commande (16) comprend des vannes hydrauliques configurées pour activer lesdits actionneurs hydrauliques ; ou dans lequel lesdits actionneurs (14, 14') sont des actionneurs électriques et dans lequel ladite unité de commande (16) comprend des commutateurs électriques configurés pour activer lesdits actionneurs électriques ; ou dans lequel lesdits actionneurs (14, 14') sont des actionneurs pneumatiques et dans lequel ladite unité de commande (16) comprend des vannes pneumatiques configurées pour activer lesdits actionneurs pneumatiques.

3. Système de charrue (100) selon la revendication 1 ou 2, dans lequel ledit système de charrue est une charrue réversible ou une charrue non-réversible.

4. Système de charrue (100) selon l'une quelconque des revendications précédentes, dans lequel lesdits deux ou plus de deux moyens de levage (6, 6') sont configurés de telle sorte que le levage et l'abaissement des cisailles de charrue (12, 12') sont réalisés par un mouvement de pivotement de la partie mobile (10) portant la cisaille de charrue (12, 12').

5. Système de charrue (100) selon l'une quelconque des revendications précédentes, dans lequel, pour les un ou plusieurs desdits moyens de levage, de préférence pour tous lesdits moyens de levage, lesdits moyens de levage sont configurés de manière à ce qu'une extrémité dudit actionneur (14, 14') est montée de manière pivotante sur ladite partie fixe (8) desdits moyens de levage, et de manière à ce que l'extrémité opposée dudit actionneur est montée de manière pivotante sur ladite partie mobile (10) desdits moyens de levage, dans lequel lesdites deux extrémités opposées dudit actionneur sont mobiles l'une par rapport à l'autre.

6. Système de charrue (100) selon l'une quelconque des revendications 1 à 5, dans lequel ladite interphase est configurée pour permettre de fournir des instructions audit actionneur (14, 14') en relation avec l'abaissement /le levage indépendants d'une cisaille de charrue (12, 12') spécifique, en fournissant une entrée de commande à ladite unité de commande (16).

7. Système de charrue (100) selon la revendication 6, dans lequel ledit système comprend de plus des moyens d'entrée (22), tels qu'un clavier ou une tablette (24) pour programmer ladite interphase ; ledit système comprenant facultativement de plus un moniteur (26) ; dans lequel ledit moniteur (26) est configuré pour surveiller les réglages et/ou l'état du fonctionnement du système de charrue.

8. Système de charrue (100) selon l'une quelconque des revendications précédentes, comprenant en outre un stockage de données (28) ; ledit stockage de données étant configuré pour permettre le stockage de données associées à des coordonnées concernant une ou plusieurs limites (76, 76') entre un champ intérieur principal (72) à labourer et un promontoire environnant (74, 74').

9. Système de charrue (100) selon la revendication 1, dans lequel lesdites coordonnées d'indication de position sont fournies par un système de navigation par satellites (32), tel qu'un Système de Navigation Globale par Satellites (GNSS), tel qu'un système GPS.

10. Système de charrue (100) selon l'une quelconque des revendications 1 à 9, comprenant en outre un ou plusieurs d'un tel récepteur d'indication de position, tel qu'un système de navigation par satellites (32), par exemple un système GPS.

11. Système de charrue (100) selon l'une quelconque des revendications précédentes, dans lequel ladite unité de commande (16) est configurée pour commander automatiquement ladite activation d'un ou plusieurs actionneurs (14, 14') en vue de lever et/ou abaisser de manière automatique et indépendante une ou plusieurs desdites cisailles de charrue.

12. Système de charrue (100) selon l'une quelconque des revendications 1 à 11, dans lequel ledit système de charrue est configuré, via ladite interphase (20), pour fournir des signaux à ladite unité de commande (16) concernant des instructions d'abaissement ou de levage indépendants d'une ou plusieurs cisailles de charrue (12, 12') selon une stratégie prédéterminée ;
dans lequel ladite stratégie prédéterminée comprend facultativement les éléments suivants :
a) dans le cas où une cisaille de charrue (12, 12') spécifique est située dans le champ principal intérieur (72) à labourer, ladite cisaille de charrue doit être disposée dans une position abaissée ;
b) dans le cas où une cisaille de charrue (12, 12') spécifique est située dans un promontoire (74, 74'), ladite cisaille de charrue doit être disposée dans une position relevée ;
c) dans le cas où une cisaille de charrue (12, 12') spécifique franchit la limite (76,76') entre le champ principal intérieur à labourer et un promontoire associé (74,74'), dans une direction allant du champ principal intérieur à labourer au promontoire, cette cisaille de charrue spécifique doit changer de position d'une position abaissée à une position relevée ;
d) dans le cas où une cisaille de charrue (12, 12') spécifique franchit la limite (76,76') entre le champ principal intérieur (72) à labourer et un promontoire associé (74,74'), dans une direction allant du promontoire au champ principal intérieur à labourer, cette cisaille de charrue spécifique doit changer de position d'une position relevée à une position abaissée.

13. Système de charrue (100) selon l'une quelconque des revendications précédentes, dans lequel ledit système de charrue comprend un mécanisme de libération de pierre et dans lequel lesdits deux ou plus de deux moyens de levage (6, 6') sont intégrés audit mécanisme de libération de pierre.

14. Utilisation d'un système de charrue (100) selon l'une quelconque des revendications 1 à 13 pour labourer un champ (72) au moins en partie entouré d'un promontoire (74, 74').

15. Procédé pour labourer un champ (72), au moins en partie entouré d'un promontoire (74, 74'), ledit procédé comprenant les étapes consistant à :
i) définir des coordonnées d'une ou de plusieurs limites (76, 76') entre un champ principal intérieur (72) à labourer et le promontoire environnant (74, 74') ;
ii) fournir un système de charrue (100) selon l'une quelconque des revendications 1 à 17 ;
ii) labourer un champ de terre en déplaçant les cisailles de charrue (12, 12') à travers la terre du champ principal intérieur (72) à labourer ;
iii) pour chacune des cisailles de charrue (12, 12'), lever une cisaille de charrue spécifique dans le cas où une cisaille de charrue spécifique franchit la limite (76,76') entre le champ principal intérieur (72) à labourer et un promontoire associé (74, 74'), dans une direction allant du champ principal intérieur à labourer au promontoire ;
iv) pour chacune des cisailles de charrue (12, 12'), abaisser une cisaille de charrue spécifique dans le cas où une cisaille de charrue spécifique franchit la limite (76, 76') entre le champ principal intérieur (72) à labourer et un promontoire associé (74,74'), dans une direction allant du promontoire au champ principal intérieur à labourer,
v) labourer la zone du promontoire (74, 74') entourant au moins en partie le champ principal intérieur (72) ;
dans lequel lesdits levage et abaissement d'une cisaille de charrue (12, 12') spécifique sont facultativement effectués automatiquement.
